# EUROPEAN PATENT SPECIFICATION

(11) **EP 3 208 688 B1**
(45) Date of publication and mention of the grant of the patent: **24.04.2019**
(21) Application number: 16155906.7
(22) Date of filing: 16.02.2016
(51) Int. Cl.: G06F 3/01, G06F 1/26, G06F 1/32, G06F 3/0354, G06F 3/041, G06F 1/16

(54) **SCREEN DEVICE FOR ENERGY HARVESTING AND SIGNAL OUTPUT**
BILDSCHIRMVORRICHTUNG ZUR ENERGIEGEWINNUNG UND SIGNALAUSGABE
DISPOSITIF D'ÉCRAN POUR LA RÉCUPÉRATION D'ÉNERGIE ET SORTIE DE SIGNAUX

(43) Date of publication of application: 23.08.2017
(73) Proprietor: Vestel Elektronik Sanayi ve Ticaret A.S., 45030 Manisa (TR)
(72) Inventor: KIRISKEN, Barbaros, 45030, Manisa, (TR); AKGÜL, Mehmet Bahattin, Muradiye, Manisa (TR); SARI, Gözde, Muradiye, Manisa (TR)
(74) Representative: Ascherl, Andreas

(56) References cited:
- WO-A1-2015/047309
- US-A1- 2013 328 447
- US-A1- 2014 240 108

## Description

The present invention refers to a screen device according to claim 1, a method for selective generation of haptic signals or electric energy by means of an oscillation element coupled to a touch screen according to claim 10 and a computer program product according to claim 12.

The dependent claims define further advantageous embodiments.

It must be understood that the references made through this description to an "embodiment", "example", "aspect" or "configuration" may point to alternative aspects related to the invention but do not necessarily correspond to real realisations of it. The actual embodiments of the invention must fall within the scope of the appended claims. Various modifications can be made to these actual embodiments of the invention as would be understood by one of ordinary skill in the art.

### Background of the Invention

Vibration systems provide vibrational alert and haptic feedback functions in portable electronic devices. Currently, vibration motors provide vibration for electronic devices; however, they have some disadvantages such as high-energy consumption and poor temporal resolution of vibration.

Document US2014/240108A1 discloses an apparatus which includes a housing having a substantially rigid portion and a substantially flexible portion. The substantially rigid portion includes a plurality of openings. The substantially flexible portion is at the plurality of openings. The substantially flexible portion is configured to provide haptic feedback, or generate a voltage.

Document WO2015/047309A1 discloses an energy harvesting component for use in a portable electronic device which includes a housing, a mass element within the housing, an energy transducer positioned inductively proximate the mass element, and a coupling between the mass element and the housing. In a first mode, the energy harvesting component may convert mechanical energy from agitation of the portable electronic device to electrical energy for use by the electronic device and, in a second mode, the energy harvesting component may induce movement of the mass element to provide haptic feedback.

Document US2013/328447A1 discloses an actuator using an electro-active polymer. The actuator includes a vibration plate fixed to an electronic device; at least one electro-active polymer attached to the vibration plate, and activated when electric voltage is applied thereto; and at least one mass joined to at least one a combination member disposed on the vibration plate.

### Object of the invention

It is therefore the object of the present invention to provide a screen device, a smart device, a method and a computer program product that provides an improved energy distribution. It is a further object of the present invention to provide a screen device, a smart device, a method and a computer program product that improves haptic signal output for a user.

### Description of the invention

The before mentioned problems and objects are solved by a screen device according to claim 1, a method according to claim 10 and a computer program product according to claim 12.

This invention relates to a screen device respectively a vibration apparatus that provides haptic feedback functions for electronic devices and harvests energy from device motions, in particular from ambient excitations, like oscillations caused by acoustic waves. Therefore, the present invention provides an energy optimized solution which also requires less space compared with vibration motors since the components of the screen device are used for at least two different functions respectively effects.

A magnetic actuator is provided according to the invention. According to the further embodiment the oscillating element overlays the magnetic actuator, wherein the magnetic actuator is operated in dependency of the different modes and wherein the oscillation element is deflectable by means of the magnetic actuator. Preferably at least one mechanical property of the oscillation element is affectable by the magnetic field caused by the magnetic actuator.

According to a further preferred embodiment the magnetic actuator is configured to apply repulsive forces to the oscillation element in the first mode for pressing the oscillation element against the touch screen. This embodiment is beneficial since oscillations caused by the oscillation element are in a stronger manner transferable to the touch screen the closer the oscillation element and the touch screen are arranged.

The magnetic actuator is configured to apply attractive forces to the oscillation element in the second mode for manipulating of the natural frequency of the oscillation element according to a further preferred embodiment. This embodiment is beneficial, since the oscillation element can be excited by different excitations, in particular acoustic waves, in particular of different sources and with different properties. Preferably a sensor unit is provided to detect the present potential excitation sources. The magnetic field caused by the magnetic actuator is preferably modified to match with the detected excitation sources. The modification of the magnetic actuator is preferably caused by the control unit based on values generated by the sensor unit as a result of the detection of the potential excitation sources.

According to a further preferred embodiment the magnetic actuator is configured to switch from the application of attractive forces to repulsive forces for modifying, in particular limiting, the oscillations of the oscillation element. This embodiment is beneficial since defects caused by intense oscillation can be avoided. The oscillations are preferably detected or supervised by means of an oscillation sensor unit. The oscillation sensor unit preferably outputs values based on the detected properties and the control unit preferably evaluates those values. Preferably, the control unit causes a modification of the magnetic field based on the measured respectively detected values.

The oscillation element preferably consists of at least one piezo electric element or the oscillation element is preferably coupled to at least one piezo electric element or the oscillation element preferably comprises at least one piezo electric element. The oscillation element respectively the arch is preferably actuated by an AC electrical current for haptic feedback applications.

According to a further preferred embodiment the oscillation element is arc-shaped and arranged in such a manner that the oscillation element is bendable between a first arc-shaped stable configuration and a second arc-shaped stable configuration, wherein the oscillation element comprises a first surface section and second surface section, wherein the first surface section and the second surface section form surface sections of opposite sides of the oscillation element, wherein the first surface is the outer surface in the first arc-shaped stable configuration and wherein the second surface is the outer surface in the second arc-shaped stable configuration. Due to the bistable structure, the arch needs less power only during transition between two states, it does not need to hold it down in either stable states. Therefore, the arch works in larger strokes and consumes less power than straight or monostable structures. The repulsive magnetic force is applied to the arch to prevent from instability of it; therefore, the arch can be worked in large strokes safely.

The oscillation element is an arc-shaped piezo electric element coupled, in particular fixed or secured, with at least two socket elements according to the present invention. The radius of the arc-shape is larger than 2 mm, in particular larger than 5 mm or larger than 10 mm or larger than 20 mm or larger than 50 mm or larger than 100 mm or larger than 150 mm. Thus, the oscillation element respectively arc-shaped element in the present screen device respectively vibration apparatus is preferably worked respectively operated by direct/inverse piezoelectric effect. In inverse piezoelectric effect, the oscillation element respectively arch provides haptic feedback functions on the touch screen. In direct piezoelectric effect, the oscillation element respectively arch harvests energy from device motions. The piezo beam respectively the oscillation element is curved in the vibration apparatus, therefore the curved beam can be worked in larger strokes and consumes less energy than a straight beam.

According to the present invention a further magnetic element is provided. The further magnetic element is preferably coupled with the oscillation element. The magnetic actuator is preferably coupled with a component overlaid by the oscillation element. Alternatively the further magnetic element is coupled with a component overlaid by the oscillation element and wherein the magnetic actuator is coupled with the oscillation element.

The magnet actuator is preferably designed as an electro magnet and/or the magnet element is preferably designed as an electro magnet, wherein the electro magnet is preferably operated in dependency of the oscillation element and/or wherein the electro magnet is preferably controlled by the control unit. The polarity of the magnet respectively magnet element fixed on the oscillation element respectively arch is preferably permanent, while polarity of the electro magnet placed away from the oscillation element preferably arch can be preferably changed. The magnetic force can be changed as repulsive or attractive with respect to polarization of the electro magnet. The repulsive force is applied on the arch for request of haptic feedback applications, whereas the attractive force is applied to the arch without request of haptic feedback applications.

The present invention further refers to a smart device, in particular a smart phone, tablet PC or smart watch. The smart device of the present invention at least has one screen device according to any of claims 1 to 8.

Thus, the vibration apparatus respectively screen device respectively smart device preferably consists of or comprises an oscillation element, in particular a clamped-clamped piezoelectric arch, a magnetic element, in particular a magnet fixed on the arch, and a magnetic actuator, in particular an electro magnet placed away from the arch. The oscillation element respectively arch is preferably placed under the touch screen, in particular contacting the touch screen, in particular at least temporarily.

The present invention further refers to a method for selective generation of haptic signals or electric energy by means of an oscillation element coupled to a touch screen. The method according to the invention is defined by claim 10.

According to a further preferred embodiment of the present invention the method further comprises the step of detecting or estimating a contact between the touch screen and a being, wherein the control unit selects the first mode in case a contact is detected or estimated, wherein the detection of a contact between the being, in particular a human, and the touch screen is detected by a sensor means, in particular a pressure sensor means.

The oscillation element is according to the present invention preferably an arc-shaped piezo electric element coupled, in particular fixed or secured, with at least two socket elements, wherein the radius of the arc-shape is larger than 2 mm, in particular larger than 5 mm or larger than 10 mm or larger than 20 mm or larger than 50 mm, and the oscillation element is bendable between a first arc-shaped stable configuration and a second arc-shaped stable configuration, wherein the oscillation element comprises a first surface section and second surface section, wherein the first surface section and the second surface section form surface sections of opposite sides of the oscillation element, wherein the first surface is the outer surface in the first arc-shaped stable configuration and wherein the second surface is the outer surface in the second arc-shaped stable configuration, wherein the first mode is a signal outputting mode, wherein the control unit causes in the signal outputting mode energy supply to the piezo electric element in dependency of a detected or estimated contacting of the touchscreen and wherein the second mode is an energy harvesting mode, wherein the control unit causes an actuation of the magnetic actuator to cause a deflection of the oscillating element to hold the oscillation element in an instable state between the first stable configuration and the second stable configuration. Electrical energy is preferably harvested by oscillation of the oscillation element respectively the arch in inverse piezo electrical effect without request of haptic feedback functions. The attractive magnetic force is applied to the oscillation element respectively the arch. The natural frequency of the oscillation element respectively the arch decreases by the attractive force that decreases rigidity of the arch. Therefore, the vibration system in this invention can harvest energy from low-level device motions.

The repulsive force between permanent and electro magnets prevents the instability of vibrating arch in large strokes for haptic feedback applications.

The attractive force between permanent and electro magnets decreases the rigidity of arch it is easier to ensure matching between the resonant frequency of the harvester and the ambient vibration frequency. Therefore, the vibration system harvests more energy.

The present invention further refers to a computer program product or system for executing one or more than one of the herein described methods.

Further benefits, goals and features of the present invention will be described by the following specification of the attached figures, in which exemplarily components of the invention are illustrated. Components of the devices and methods according to the inventions, which match at least essentially with respect to their function can be marked with the same reference sign, wherein such components do not have to be marked or described in all figures.

In the following the invention is just exemplarily described with respect to the attached figures.

### Brief Description of the Drawings

- Fig. 1: shows an isometric view of a haptic feedback apparatus in accordance with one exemplary embodiment of the present invention;
- Fig. 2a: shows a placement of the vibration apparatus respectively the screen device in an electronic device;
- Fig. 2b: shows a schematic side view of the inventive device shown in Figure 2a.
- Fig. 3: shows a view of the vibration apparatus placed in the portable electronic device;
- Fig. 4a: shows a view of the screen device according to the invention for haptic feedback applications;
- Fig. 4b: shows a mode wherein the oscillation unit respectively piezo arch is vibrates in small strokes
- Fig. 4c: indicates an oscillation of the oscillation element in large strokes;
- Fig. 5: shows how the screen device is can be operated without request of haptic feedback applications, in particular while energy harvesting.

### Detailed Description of the Invention

In this section, the invention is further explained in detail.

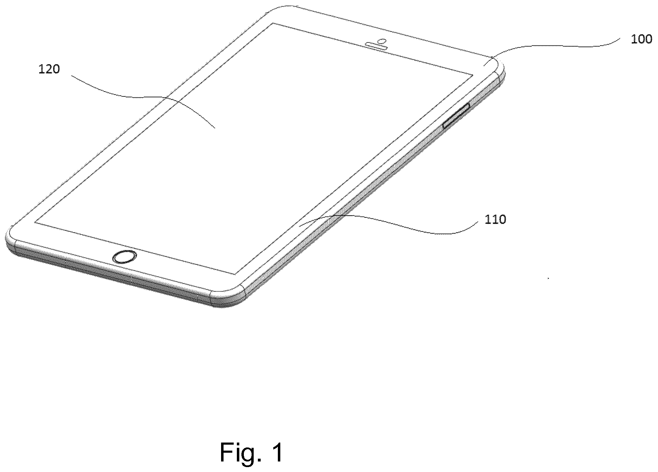

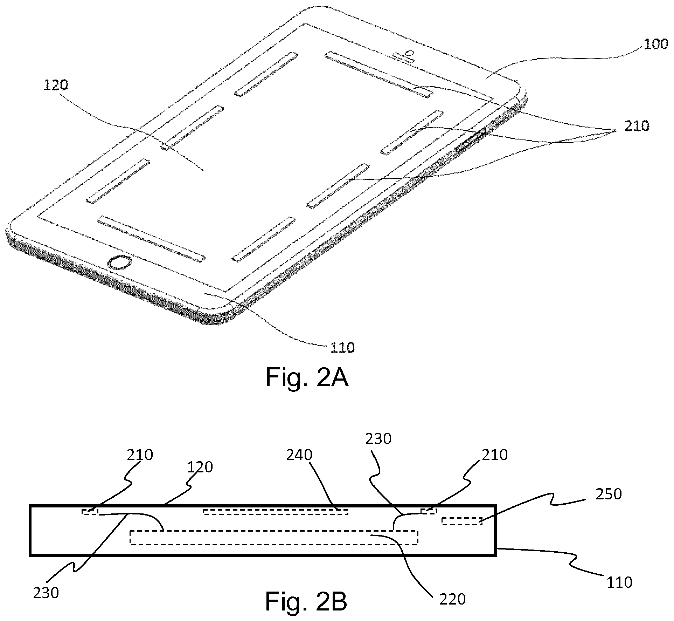

In Figure 1, the haptic feedback apparatus 100 is shown. The haptic feedback apparatus 100 consists of a housing 110, a touch screen 120 and a vibration apparatus 210. The haptic feedback apparatus 100 is assembled in a tablet PC. The haptic feedback apparatus 100 can be applied in other electronic devices, such as mobile phones, notebook computers and portable game devices. As shown in Fig. 2A, multiple screen devices 210 can be provided for one end-user device 100, wherein preferably multiple or all screen devices are preferably equipped with a section of the same touch screen 120. In case of multiple screen devices 210 different shapes of the screen devices 210 are possible. At least one or exactly one screen device 210 respectively device with the arrangement of the oscillation element 310 according to the invention is present, wherein at least two or more than two, in particular 5 or more than 5 or up to 5, 8 or more than 8 or up to 8, 10 or more than 10 or up to 10, 15 or more than 15 or up to 15, 20 or more than 20 or up to 20, 25 or more than 25 or up to 25, 50 or more than 50 or up to 50 of such devices can be provided, in particular incorporated in an end-user device respectively feedback apparatus 100.

A schematic side view of the apparatus 100 of Fig. 2A is shown in Fig. 2B. The screen devices 210 are connected to one or more accumulator unit 220 by means of a connection 230 respectively wire or printed circuit board. Energy harvested by the screen device 210 is thus conductable by means of that connection 230 to the accumulator unit 220. The individual screen devices 210 are individually or by means of a data bus directly or indirectly connected to a control unit 250, in particular a processor unit. The control unit 250 preferably determines the mode in question and causes the components to operate as desired in those modes. E.g. in case the first mode is determined or selected an electric current is conducted, in particular from the accumulator unit 220, to at least or to exactly one screen device 210. The electric current causes the oscillation element 310 of the at least one respective screen device 210 to oscillate and thus to vibrate the touch screen 120. Hereby preferably a detection or estimation of a contact between a being, in particular a human, in particular a fingertip of a human, takes place. Such a detection or estimation is preferably carried out by means of one or more sensor units 240, in particular pressure sensor units. The outputted signal if the sensor unit 240 respectively sensor units is preferably interpreted by the control unit 250 which then selects the required mode. It is alternatively conceivable that one or more screen devices 210 are operated as sensor unit. In case the screen devices 210 are operated in a second mode, in particular an energy harvesting mode, any contact by a user causes a significant deflection of the oscillation element 310 and therefore an interruption of the energy harvesting excitation. It is thus alternatively or additionally possible that the control unit 250 interprets the signal indicating such an interruption as mode changing event.

The vibration apparatus 210 is aligned under the touch screen 120 in Figure 2A. Placement of them 210 can be changed to provide for various of haptic feedback functions.

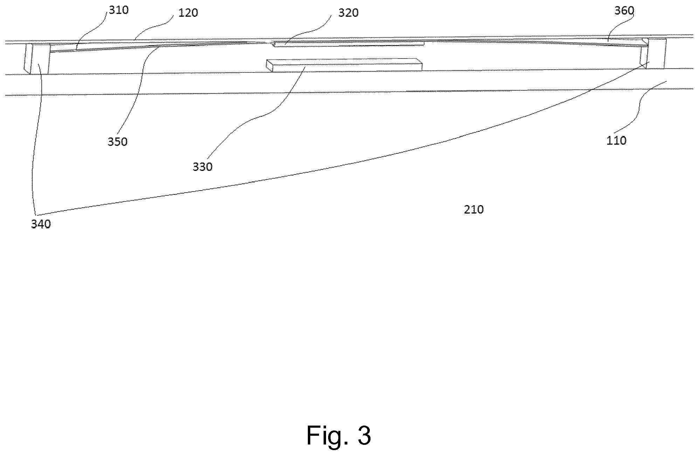

In Figure 3, the vibration apparatus 210 placed under the touch screen 120. The vibration apparatus 210 consists of a piezo beam 310, a permanent magnet 320 and an electro magnet 330. The clamped-clamped beam 310 is slightly curved. The permanent magnet 320 is fixed on bottom surface 350 of the piezo arch 310. Top surface 360 of the piezo arch 310 contacts with the touch screen 120. The vibration apparatus 210 is actuated by piezo electrical effect.

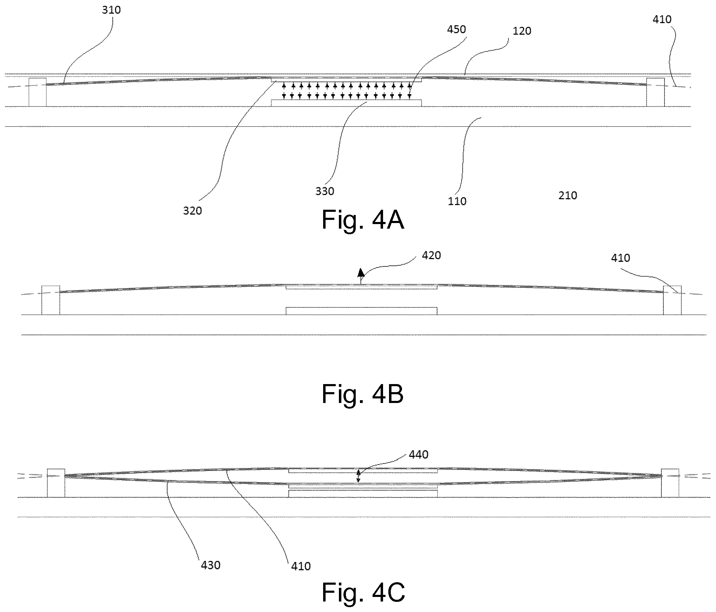

In Figure 4A, the piezo arch 310 is in the first stable position 410 and it does not need energy for this. The piezo arch 310 is actuated by harmonic electrical current, therefore the haptic feedback functions are provided on the touch screen 120 for users. Thus, this Figure shows the first mode. That means an oscillation of the oscillation element 310 is causable by an application of an electric current to the oscillation element 310, wherein the oscillations of the oscillation element 310 cause the touch screen 120 at least locally vibrating for outputting signals via the vibrations to a user touching that screen 120. The magnetic actuator 330 generates a repulsive field for causing a contact between the oscillation element 310 and the touch screen 120. In the first mode the oscillation element 310 is preferably pressed against the touch screen 120 by means of a magnetic field. The magnetic actuator 330 is preferably arranged on the oscillation element 310 or (as shown) spaced apart from the oscillation element 310. Furthermore, preferably a further magnetic element 320, which is preferably a permanent magnet, is attached or arranged at or as part of the oscillation element. It is alternatively also conceivable that the oscillation element 310 has at least partially properties of a permanent magnet.

In Figure 4B, the piezo arch 310 vibrates around first stable situation for requirement of small amplitude oscillations.

In Figure 4C, the piezo arch 310 vibrates between two stable states for requirement of large amplitude oscillations. The bistable structure, the arch 310 has advantages such as working in large strokes and less power consumption. The repulsive magnetic force 450 is applied to the arch 310. The magnetic force 450 applies to the arch while vibrating between its two stable states. It makes easy that the arch returns second stable state to first stable state, therefore the magnetic force prevents to the arch 310 from instability in large strokes. The mass of the magnet 320 fixed on the arch 310 decreases resonance frequency of the arch 310; therefore consume of the activation energy of the system decreases. It can be understood from Figure 4C that a rigidly fixed oscillation element 210, that has a bow respectively arc-shape in the stable states, needs to travel through a wave shape by switching the stable states.

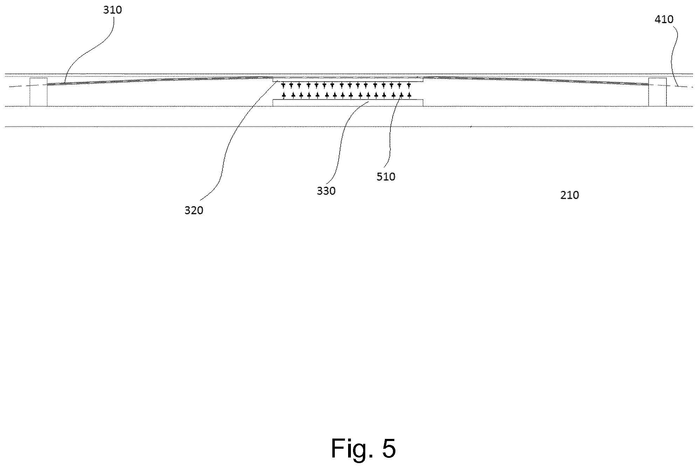

In Figure 5, without request of haptic feedback applications, the arch 310 is in the first stable state 410. The attractive magnetic force 510 is applied to the arch 310. The magnetic force 510 decreases resonance frequency of the arch 310 by decreasing rigidity of it. Therefore, resonance frequency of the arch matches frequency of device motions and thus more energy can be harvested. Thus, Figure 5 shows a situation representing the second mode.

Thus, a screen device 210, in particular for use in smart devices, is described, wherein the screen device 210 preferably at least comprises a touch screen 120, an oscillation element 310 at least temporarily coupled to the touch screen 120, wherein the touch screen 120 overlays the oscillating element 310, a control unit operating the oscillation element 310 in at least two different modes, wherein in a first mode an oscillation of the oscillation element 310 is causable by an application of an electric current to the oscillation element 310, wherein the oscillations of the oscillation element 310 cause the touch screen 120 at least locally vibrating for outputting signals via the vibrations to a user touching that screen 120, and wherein in a second mode the touch screen 120 transfers ambient excitations to the oscillation element 310, wherein those excitations are transformed by means of the oscillation element 310 into electric energy.

Therefore, a new vibration apparatus respectively screen device has been developed to provide haptic feedback functions for portable electronic devices, in particular smart devices. The vibration apparatus preferably consists of a piezoelectric arch, a magnet fixed on the piezoelectric arch, a touch screen and an electro-magnet or another permanent magnet. The arch is actuated by inverse piezoelectric effect and thus haptic feedback functions are provided on the touch screen for users. The bistable nature, the arch can be worked in large strokes compared to straight and monostable structures. Additional stationary permanent magnet or electro-magnet is optimizing strokes by changing overall natural frequency of the system. In addition, the vibration apparatus can be worked as an energy harvester in direct piezoelectric effect. Consequently, the vibration apparatus provides haptic feedback functions if requested by users. It harvests energy, if not requested of haptic feedback functions as well.

Thus, the piezoelectric beam can be used to provide various and controllable vibration functions for users. In this invention, the haptic feedback functions are provided by inverse piezoelectric effect of the arch. In direct piezoelectric effect, the arch harvests energy while oscillating from device motions.

### Reference numbers:

- 100: haptic feedback apparatus or screen device
- 110: housing
- 120: touch screen
- 210: vibration apparatus or screen device
- 220: accumulator
- 230: connection / cable
- 240: sensor means
- 250: control unit / processor unit
- 310: piezo beam or oscillation element
- 320: permanent magnet or magnetic element
- 330: electro magnet or magnetic actuator
- 340: socket element
- 350: bottom surface
- 360: top surface
- 410: first stable position
- 420: direction of transferring oscillations
- 430: second stable position
- 440: maximum displacement
- 450: repulsive magnetic force
- 510: attractive magnetic force

## Claims

1. Screen device (210), in particular for use in smart devices,
at least comprising:
- a touch screen (120),
- an oscillation element (310),
wherein the touch screen (120) overlays the oscillating element (310), wherein the oscillation element (310) is an arcshaped piezo electric element coupled with at least two socket elements (340),
wherein the radius of the arcshape is larger than 2 mm,
- a control unit for operating the oscillation element (310) in at least two different modes of operation,
- a magnetic actuator (330), wherein the oscillating element (310) overlays the magnetic actuator (330), wherein the magnetic actuator (330) is operated in dependency of the different modes,
wherein the oscillation element (310) is deflectable by means of the magnetic actuator (330)
- a further magnetic element (320),
wherein the further magnetic element (320) is located at the oscillation element (310) and wherein the magnetic actuator (330) is located at a component overlaid by the oscillation element (310) or
wherein the further magnetic element (320) is located at a component overlaid by the oscillation element (310) and wherein the magnetic actuator (330) is located at the oscillation element (310),
wherein a selection between a first mode and a second mode takes place,
wherein in the first mode an oscillation of the oscillation element (310) is causable by an application of an electric current to the oscillation element (310), wherein the oscillations of the oscillation element (310) cause the touch screen (120) at least locally vibrating for outputting signals via the vibrations to a user touching that touch screen (120),
and
wherein in a second mode the touch screen (120) transfers ambient excitations to the oscillation element (310), wherein those excitations are transformed by means of the oscillation element (310) into electric energy,
wherein the first mode is a signal outputting mode, wherein the control unit causes in the signal outputting mode energy supply to the piezo electric element in dependency of a detected or estimated contacting of the touchscreen (120),
and
wherein the second mode is an energy harvesting mode, wherein the control unit causes in the energy harvesting mode an actuation of the magnetic actuator (330) to cause a deflection of the oscillating element (310) to hold the oscillation element (310) in an instable state between the first stable configuration and the second stable configuration.

2. Screen device according to claim 1,
**characterized in that**
the magnetic actuator (330) is configured to apply repulsive forces to the oscillation element (310) in the first mode for pressing the oscillation element (310) against the touch screen (120).

3. Screen device according to claim 1 or 2,
**characterized in that**
the magnetic actuator (330) is configured to apply attractive forces to the oscillation element (310) in the second mode for manipulating the natural frequency of the oscillation element (310).

4. Screen device according to claim 3,
**characterized in that**
the magnetic actuator (330) is configured to switch from the application of attractive forces to repulsive forces for modifying, in particular limiting, the oscillations of the oscillation element (310).

5. Screen device according to any of the preceding claims, **characterized in that**
the oscillation element (310) consists of at least one piezo electric element or the oscillation element (310) is coupled to at least one piezo electric element or the oscillation element (310) comprises at least one piezo electric element.

6. Screen device according to any of the preceding claims, **characterized in that**
the oscillation element (310) is arc-shaped and arranged in such a manner that the oscillation element (310) is bendable between a first arc-shaped stable configuration and a second arc-shaped stable configuration, wherein the oscillation element (310) comprises a first surface section (360) and second surface section (350), wherein the first surface section (360) and the second surface section (350) form surface sections of opposite sides of the oscillation element (310), wherein the first surface section (360) is the outer surface in the first arc-shaped stable configuration and wherein the second surface section (350) is the outer surface in the second arc-shaped stable configuration.

7. Screen device according to any of the preceding claims, **characterized in that**
the radius of the arc-shape is larger than 5 mm or larger than 10 mm or larger than 20 mm or larger than 50 mm.

8. Screen device according to any of the preceding claims,
**characterized in that**
the magnet actuator (330) is an electro magnet and/or the magnet element (320) is an electro magnet,
wherein the electro magnet is operated in dependency of the oscillation element (310) and/or
wherein electro magnet is controlled by the control unit.

9. Smart device, in particular smart phone, tablet PC or smart watch, at least having one screen device (210) according to any of claims 1 to 8.

10. Method for selective generation of haptic signals or electric energy by means of an
oscillation element (310) coupled to a touch screen (120),
at least comprising the steps:
Providing
a touch screen (120),
an oscillation element (310),
wherein the touch screen (120) overlays the oscillating element (310), wherein the oscillation element (310) is an arcshaped piezo electric element coupled with at least two socket elements (340), wherein the radius of the arcshape is larger than 2 mm,
a control unit for operating the oscillation element (310) in at least two different modes,
a magnetic actuator (330),
wherein the oscillating element (310) overlays the magnetic actuator (330),
wherein the magnetic actuator (330) is operated in dependency of the different modes,
wherein the oscillation element (310) is deflectable by means of the magnetic actuator (330)
a further magnetic element (320),
wherein the further magnetic element (320) is located at the oscillation element (310) and wherein the magnetic actuator (330) is located at a component overlaid by the oscillation element (310) or
wherein the further magnetic element (320) is located at a component overlaid by the oscillation element (310) and wherein the magnetic actuator (330) is located at the oscillation element (310),
Executing a selection step,
wherein a selection between a first mode and a second mode takes place,
wherein in the first mode an oscillation of the oscillation element (310) is causable by an application of an electric current to the oscillation element (310), wherein the oscillations of the oscillation element (310) cause the touch screen (120) at least locally vibrating for outputting signals via the vibrations to a user touching that touch screen (120),
and
wherein in a second mode the touch screen (120) transfers ambient excitations to the oscillation element (310), wherein those excitations are transformed by means of the oscillation element (310) into electric energy,
Executing the selected mode,
wherein the first mode is a signal outputting mode, wherein the control unit causes in the signal outputting mode energy supply to the piezo electric element in dependency of a detected or estimated contacting of the touchscreen (120),
and
wherein the second mode is an energy harvesting mode, wherein the control unit causes in the energy harvesting mode an actuation of the magnetic actuator (330) to cause a deflection of the oscillating element (310) to hold the oscillation element (310) in an instable state between the first stable configuration and the second stable configuration.

11. Method according to claim 10,
**characterized in that**
the method further comprises the step of detecting or estimating a contact between the touch screen (120) and a user, wherein the control unit selects the first mode in case a contact is detected or estimated, wherein the detection of a contact between the user and the touch screen (120) is detected by a sensor means, in particular a pressure sensor means.

12. Computer program product or system for executing a method according to any of claims 10 to 11.

## Patentansprüche

1. Bildschirmvorrichtung (210), insbesondere zur Verwendung mit Smart-Geräten, mindestens aufweisend:
- einen Touchscreen (120),
- ein Schwingelement (310),
wobei der Touchscreen (120) das Schwingelement (310) überlagert,
wobei das Schwingelement (310) ein bogenförmiges piezoelektrisches Element ist, das mit mindestens zwei Sockelelementen (340) gekoppelt ist,
wobei der Krümmungsradius der Bogenform größer als 2 mm ist,
- eine Steuereinheit zum Betreiben des Schwingelements (310) in mindestens zwei verschiedenen Betriebsmodi,
- einen Magnetaktor (330),
wobei das Schwingelement (310) den Magnetaktor (330) überlagert,
wobei der Magnetaktor (330) in Abhängigkeit von den verschiedenen Betriebsmodi betrieben wird,
wobei das Schwingelement (310) mittels des Magnetaktors auslenkbar ist,
- ein weiteres magnetisches Element (320),
wobei das weitere magnetische Element (320) an dem Schwingelement (310) angeordnet ist und wobei der Magnetaktor (330) an einer Komponente angeordnet ist, die von dem Schwingelement (310)überlagert wird, oder
wobei das weitere magnetische Element (320) an einer Komponente angeordnet ist, die von dem Schwingelement (310) überlagert wird, und wobei der Magnetaktor (330) an dem Schwingelement (310) angeordnet ist,
wobei eine Auswahl zwischen einem ersten Betriebsmodus und einem zweiten Betriebsmodus erfolgt,
wobei in dem ersten Betriebsmodus eine Schwingung des Schwingelements (310) durch Anlegen eines elektrischen Stroms an das Schwingelement (310) verursachbar ist, wobei die Schwingungen des Schwingelements (310) verursachen, dass der Touchscreen (120) mindestens lokal vibriert, um über die Vibrationen Signale an einen Nutzer auszugeben, der den Touchscreen (120) berührt,
und
wobei in einem zweiten Betriebsmodus der Touchscreen (120) Anregungen aus der Umwelt an das Schwingelement (310) überträgt, wobei diese Anregungen mittels des Schwingelements (310) in elektrische Energie umgewandelt werden,
wobei der erste Betriebsmodus ein Signalausgabemodus ist, wobei die Steuereinheit in dem Signalausgabemodus in Abhängigkeit von einer erfassten oder geschätzten Kontaktierung des Touchscreens (120) eine Energieversorgung an das piezoelektrische Element verursacht,
und
wobei der zweite Betriebsmodus ein Energieerntemodus ist, wobei die Steuereinheit in dem Energieerntemodus eine Betätigung des Magnetaktors (330) verursacht, um eine Auslenkung des Schwingelements (310) zu verursachen, um das Schwingelement (310) in einem instabilen Zustand zwischen der ersten stabilen Konfiguration und der zweiten stabilen Konfiguration zu halten.

2. Bildschirmvorrichtung gemäß Anspruch 1,
**dadurch gekennzeichnet, dass**
der Magnetaktor (330) dazu konfiguriert ist, in dem ersten Modus Abstoßungskräfte an das Schwingelement (310) anzulegen, um das Schwingelement (310) gegen den Touchscreen (120) zu drücken.

3. Bildschirmvorrichtung gemäß Anspruch 1 oder 2,
**dadurch gekennzeichnet, dass**
der Magnetaktor (330) dazu konfiguriert ist, in dem zweiten Modus Anziehungskräfte an das Schwingelement (310) anzulegen, um die Eigenfrequenz des Schwingelements (310) zu manipulieren.

4. Biidschirmvorrichtung gemäß Anspruch 3,
**dadurch gekennzeichnet, dass**
der Magnetaktor (330) dazu konfiguriert ist, von dem Anlegen von Anziehungskräften zu Abstoßungskräften umzuschalten, um die Schwingungen des Schwingelements (310) zu modifizieren, insbesondere zu begrenzen.

5. Bildschirmvorrichtung gemäß einem der vorhergehenden Ansprüche,
**dadurch gekennzeichnet, dass**
das Schwingelement (310) aus mindestens einem piezoelektrischen Element besteht oder das Schwingelement (310) mit mindestens einem piezoelektrischen Element gekoppelt ist oder das Schwingelement (310) mindestens ein piezoelektrisches Element aufweist.

6. Biidschirmvorrichtung gemäß einem der vorhergehenden Ansprüche,
**dadurch gekennzeichnet, dass**
das Schwingelement (310) bogenförmig ist und in einer solchen Weise angeordnet ist, dass das Schwingelement (310) zwischen einer ersten bogenförmigen stabilen Konfiguration und einer zweiten bogenförmigen stabilen Konfiguration biegbar ist, wobei das Schwingelement (310) einen ersten Oberflächenabschnitt (360) und einen zweiten Oberflächenabschnitt (350) aufweist, wobei der erste Oberflächenabschnitt (360) und der zweite Oberflächenabschnitt (350) Oberflächenabschnitte gegenüberliegender Seiten des Schwingelements (310) bilden, wobei der erste Oberflächenabschnitt (360) in der ersten bogenförmigen stabilen Konfiguration die Außenoberfläche ist und wobei der zweite Oberflächenabschnitt (350) in der zweiten bogenförmigen stabilen Konfiguration die Außenoberfläche ist.

7. Bildschirmvorrichtung gemäß einem der vorhergehenden Ansprüche,
**dadurch gekennzeichnet, dass**
der Krümmungsradius der Bogenform größer als 5 mm oder größer als 10 mm oder größer als 20 mm oder größer als 50 mm ist.

8. Bildschirmvorrichtung gemäß einem der vorhergehenden Ansprüche,
**dadurch gekennzeichnet, dass**
der Magnetaktor (330) ein Elektromagnet ist und/oder das magnetische Element (320) ein Elektromagnet ist,
wobei der Elektromagnet in Abhängigkeit von dem Schwingelement (310) betrieben wird und/oder
wobei der Elektromagnet von der Steuereinheit gesteuert wird.

9. Smart-Gerät, insbesondere Smartphone, Tablet oder Smart-Watch, das bzw. die eine Bildschirmvorrichtung (210) gemäß einem der Ansprüche 1 bis 8 hat.

10. Verfahren zum selektiven Erzeugen von haptischen Signalen oder elektrischer Energie mittels eines Schwingelements (310), das mit einem Touchscreen (120) gekoppelt ist,
mindestens aufweisend die folgenden Schritte:
Bereitstellen
eines Touchscreens (120),
eines Schwingelements (310),
wobei der Touchscreen (120) das Schwingelement (310) überlagert,
wobei das Schwingelement (310) ein bogenförmiges piezoelektrisches Element ist, das mit mindestens zwei Sockelelementen (340) gekoppelt ist,
wobei der Krümmungsradius der Bogenform größer als 2 mm ist,
einer Steuereinheit zum Betreiben des Schwingelements (310) in mindestens zwei Betriebsmodi,
eines Magnetaktors (330),
wobei das Schwingelement (310) den Magnetaktor (330) überlagert,
wobei der Magnetaktor (330) in Abhängigkeit von den verschiedenen Betriebsmodi betrieben wird,
wobei das Schwingelement (310) mittels des Magnetaktors auslenkbar ist,
eines weiteren magnetischen Elements (320),
wobei das weitere magnetische Element (320) an dem Schwingelement (310) angeordnet ist und wobei der Magnetaktor (330) an einer Komponente angeordnet ist, die von dem Schwingelement (310) überlagert wird, oder
wobei das weitere magnetische Element (320) an einer Komponente angeordnet ist, die von dem Schwingelement (310) überlagert wird, und wobei der Magnetaktor (330) an dem Schwingelement (310) angeordnet ist,
Ausführen eines Auswahlschrittes,
wobei eine Auswahl zwischen einem ersten Betriebsmodus und einem zweiten Betriebsmodus erfolgt,
wobei in dem ersten Betriebsmodus eine Schwingung des Schwingelements (310) durch Anlegen eines elektrischen Stroms an das Schwingelement (310) verursachbar ist, wobei die Schwingungen des Schwingelements (310) verursachen, dass der Touchscreen (120) mindestens lokal vibriert, um über die Vibrationen Signale an einen Nutzer auszugeben, der den Touchscreen (120) berührt,
und
wobei in einem zweiten Betriebsmodus der Touchscreen (120) Anregungen aus der Umwelt an das Schwingelement (310) überträgt, wobei diese Anregungen mittels des Schwingelements (310) in elektrische Energie umgewandelt werden,
Ausführen des ausgewählten Betriebsmodus,
wobei der erste Betriebsmodus ein Signalausgabemodus ist, wobei die Steuereinheit in dem Signalausgabemodus in Abhängigkeit von einer erfassten oder geschätzten Kontaktierung des Touchscreens (120) eine Energieversorgung an das piezoelektrische Element verursacht,
und
wobei der zweite Betriebsmodus ein Energieerntemodus ist, wobei die Steuereinheit in dem Energieerntemodus eine Betätigung des Magnetaktors (330) verursacht, um eine Auslenkung des Schwingelements (310) zu verursachen, um das Schwingelement (310) in einem instabilen Zustand zwischen der ersten stabilen Konfiguration und der zweiten stabilen Konfiguration zu halten.

11. Verfahren gemäß Anspruch 10,
**dadurch gekennzeichnet, dass**
das Verfahren ferner den Schritt des Erfassens oder Schätzens eines Kontakts zwischen dem Touchscreen (120) und einem Nutzer aufweist, wobei die Steuereinheit in dem Fall, in dem ein Kontakt erfasst oder geschätzt wird, den ersten Betriebsmodus auswählt, wobei die Erfassung eines Kontakts zwischen dem Nutzer und dem Touchscreen (120) von einem Sensormittel, insbesondere einem Drucksensormittel, erfasst wird.

12. Computerprogrammprodukt oder System zum Ausführen eines Verfahrens gemäß einem der Ansprüche 10 bis 11.

## Revendications

1. Dispositif d'écran (210), en particulier pour son utilisation dans des dispositifs intelligents, comprenant au moins :
- un écran tactile (120),
- un élément d'oscillation (310),
dans lequel l'écran tactile (120) recouvre l'élément oscillant (310),
dans lequel l'élément d'oscillation (310) est un élément piézoélectrique en forme d'arc couplé à au moins deux éléments de prise (340),
dans lequel le rayon de la forme d'arc est supérieur à 2 mm,
- une unité de commande pour faire fonctionner l'élément d'oscillation (310) dans au moins deux modes de fonctionnement différents,
- un actionneur magnétique (330), dans lequel l'élément oscillant (310) recouvre l'actionneur magnétique (330),
dans lequel l'actionneur magnétique (330) est mis en fonctionnement en fonction des modes différents,
dans lequel l'élément d'oscillation (310) peut être défléchi au moyen de l'actionneur magnétique (330)
- un élément magnétique supplémentaire (320),
dans lequel l'élément magnétique supplémentaire (320) est situé au niveau de l'élément d'oscillation (310) et dans lequel l'actionneur magnétique (330) est situé au niveau d'un composant recouvert par l'élément d'oscillation (310) ou
dans lequel l'élément magnétique supplémentaire (320) est situé au niveau d'un composant recouvert par l'élément d'oscillation (310) et dans lequel l'actionneur magnétique (330) est situé au niveau de l'élément d'oscillation (310),
dans lequel une sélection entre un premier mode et un second mode a lieu,
dans lequel, dans le premier mode, une oscillation de l'élément d'oscillation (310) peut être provoquée par une application d'un courant électrique à l'élément d'oscillation (310), dans lequel les oscillations de l'élément d'oscillation (310) amènent l'écran tactile (120) à vibrer au moins localement pour fournir en sortie des signaux via les vibrations à un utilisateur touchant cet écran tactile (120),
et
dans lequel, dans un second mode, l'écran tactile (120) transfère des excitations ambiantes à l'élément d'oscillation (310), dans lequel ces excitations sont transformées au moyen de l'élément d'oscillation (310) en énergie électrique,
dans lequel le premier mode est un mode de fourniture en sortie de signal, dans lequel l'unité de commande provoque dans le mode de fourniture en sortie de signal une alimentation en énergie de l'élément piézoélectrique en fonction d'une entrée en contact détectée ou estimée de l'écran tactile (120),
et
dans lequel le second mode est un mode de récupération d'énergie, dans lequel l'unité de commande provoque dans le mode de récupération d'énergie un actionnement de l'actionneur magnétique (330) pour provoquer une déflexion de l'élément oscillant (310) afin de maintenir l'élément d'oscillation (310) dans un état instable entre la première configuration stable et la seconde configuration stable.

2. Dispositif d'écran selon la revendication 1,
**caractérisé en ce que**
l'actionneur magnétique (330) est configuré pour appliquer des forces de répulsion à l'élément d'oscillation (310) dans le premier mode pour appuyer l'élément d'oscillation (310) contre l'écran tactile (120).

3. Dispositif d'écran selon la revendication 1 ou 2,
**caractérisé en ce que**
l'actionneur magnétique (330) est configuré pour appliquer des forces d'attraction à l'élément d'oscillation (310) dans le second mode pour manipuler la fréquence naturelle de l'élément d'oscillation (310).

4. Dispositif d'écran selon la revendication 3,
**caractérisé en ce que**
l'actionneur magnétique (330) est configuré pour passer de l'application de forces d'attraction à des forces de répulsion pour modifier, en particulier limiter, les oscillations de l'élément d'oscillation (310).

5. Dispositif d'écran selon l'une quelconque des revendications précédentes,
**caractérisé en ce que**
l'élément d'oscillation (310) consiste en au moins un élément piézoélectrique ou l'élément d'oscillation (310) est couplé à au moins un élément piézoélectrique ou l'élément d'oscillation (310) comprend au moins un élément piézoélectrique.

6. Dispositif d'écran selon l'une quelconque des revendications précédentes,
**caractérisé en ce que**
l'élément d'oscillation (310) est en forme d'arc et agencé de manière à ce que l'élément d'oscillation (310) puisse être fléchi entre une première configuration stable en forme d'arc et une seconde configuration stable en forme d'arc, dans lequel l'élément d'oscillation (310) comprend une première section de surface (360) et une seconde section de surface (350), dans lequel la première section de surface (360) et la seconde section de surface (350) forment des sections de surface de côtés opposés de l'élément d'oscillation (310), dans lequel la première section de surface (360) est la surface extérieure dans la première configuration stable en forme d'arc et dans lequel la seconde section de surface (350) est la surface extérieure dans la seconde configuration stable en forme d'arc.

7. Dispositif d'écran selon l'une quelconque des revendications précédentes,
**caractérisé en ce que**
le rayon de la forme d'arc est supérieur à 5 mm ou supérieur à 10 mm ou supérieur à 20 mm ou supérieur à 50 mm.

8. Dispositif d'écran selon l'une quelconque des revendications précédentes,
**caractérisé en ce que**
l'actionneur magnétique (330) est un électroaimant et/ou l'élément magnétique (320) est un électroaimant,
dans lequel l'électroaimant est mis en fonctionnement en fonction de l'élément d'oscillation (310) et/ou
dans lequel l'électroaimant est commandé par l'unité de commande.

9. Dispositif intelligent, en particulier téléphone intelligent, tablette PC ou montre intelligente, ayant au moins un dispositif d'écran (210) selon l'une quelconque des revendications 1 à 8.

10. Procédé de génération sélective de signaux haptiques ou d'énergie électrique au moyen d'un élément d'oscillation (310) couplé à un écran tactile (120),
comprenant au moins les étapes :
la fourniture
d'un écran tactile (120),
d'un élément d'oscillation (310),
dans lequel l'écran tactile (120) recouvre l'élément oscillant (310),
dans lequel l'élément d'oscillation (310) est un élément piézoélectrique en forme d'arc couplé à au moins deux éléments de prise (340), dans lequel le rayon de la forme d'arc est supérieur à 2 mm,
d'une unité de commande pour faire fonctionner l'élément d'oscillation (310) dans au moins deux modes différents,
d'un actionneur magnétique (330),
dans lequel l'élément oscillant (310) recouvre l'actionneur magnétique (330),
dans lequel l'actionneur magnétique (330) est mis en fonctionnement en fonction des modes différents,
dans lequel l'élément d'oscillation (310) peut être défléchi au moyen de l'actionneur magnétique (330)
d'un élément magnétique supplémentaire (320),
dans lequel l'élément magnétique supplémentaire (320) est situé au niveau de l'élément d'oscillation (310) et dans lequel l'actionneur magnétique (330) est situé au niveau d'un composant recouvert par l'élément d'oscillation (310) ou
dans lequel l'élément magnétique supplémentaire (320) est situé au niveau d'un composant recouvert par l'élément d'oscillation (310) et dans lequel l'actionneur magnétique (330) est situé au niveau de l'élément d'oscillation (310),
l'exécution d'une étape de sélection,
dans lequel une sélection entre un premier mode et un second mode a lieu,
dans lequel, dans le premier mode, une oscillation de l'élément d'oscillation (310) peut être provoquée par une application d'un courant électrique à l'élément d'oscillation (310), dans lequel les oscillations de l'élément d'oscillation (310) amènent l'écran tactile (120) à vibrer au moins localement pour fournir en sortie des signaux via les vibrations à un utilisateur touchant cet écran tactile (120),
et
dans lequel, dans un second mode, l'écran tactile (120) transfère des excitations ambiantes à l'élément d'oscillation (310), dans lequel ces excitations sont transformées au moyen de l'élément d'oscillation (310) en énergie électrique,
l'exécution du mode sélectionné,
dans lequel le premier mode est un mode de fourniture en sortie de signal, dans lequel l'unité de commande provoque dans le mode de fourniture en sortie de signal une alimentation en énergie de l'élément piézoélectrique en fonction d'une entrée en contact détectée ou estimée de l'écran tactile (120),
et
dans lequel le second mode est un mode de récupération d'énergie, dans lequel l'unité de commande provoque dans le mode de récupération d'énergie un actionnement de l'actionneur magnétique (330) pour provoquer une déflexion de l'élément oscillant (310) afin de maintenir l'élément d'oscillation (310) dans un état instable entre la première configuration stable et la seconde configuration stable.

11. Procédé selon la revendication 10,
**caractérisé en ce que**
le procédé comprend en outre l'étape de détection ou d'estimation d'un contact entre l'écran tactile (120) et un utilisateur, dans lequel l'unité de commande sélectionne le premier mode dans le cas où un contact est détecté ou estimé, dans lequel la détection d'un contact entre l'utilisateur et l'écran tactile (120) est détectée par un moyen de capteur, en particulier un moyen de capteur de pression.

12. Produit-programme ou système d'ordinateur pour exécuter un procédé selon l'une quelconque des revendications 10 et 11.
